Europäisches Patentamt

European Patent Office

Office européen des brevets

(19)

(11) Publication number: **0 246 473**
**B1**

# EUROPEAN PATENT SPECIFICATION

(12)

(45) Date of publication of the patent specification:
18.04.90

(51) Int. Cl.⁴: **C09J 175/04**

(21) Application number: **87106244.4**

(22) Date of filing: **29.04.87**

(54) Acrylic modified reactive urethane hot melt adhesive compositions.

(30) Priority: **05.05.86 US 859539**

(43) Date of publication of application:
**25.11.87 Bulletin 87/48**

(45) Publication of the grant of the patent:
**18.04.90 Bulletin 90/16**

(84) Designated Contracting States:
**CH DE FR GB IT LI NL SE**

(56) References cited:
**EP-A- 0 118 171**
**FR-A- 2 213 974**
**FR-A- 2 299 350**
**GB-A- 2 137 638**

(73) Proprietor: **National Starch and Chemical Corporation, 10 Finderne Avenue, P.O. Box 6500, Bridgewater, New Jersey 08807(US)**

(72) Inventor: **Stanley, Henry, 8 Reservoir Place, Cedar Grove New Jersey 07009(US)**
Inventor: **Davis, Irwin, 678 Meadow Road, Bridgewater New Jersey 08807(US)**

(74) Representative: **Hagemann, Heinrich, Dr. Dipl.-Chem. et al, Patentanwälte HAGEMANN & KEHL Ismaninger Strasse 108 Postfach 860329, D-8000 München 86(DE)**

## Description

The present invention is directed to low viscosity reactive urethane hot melt adhesive compositions which are improved with respect to their cohesive and adhesive strength by the addition thereto of low molecular weigth polymers of ethylenically unsaturated monomers containing no active hydrogen. In accordance with one embodiment of the invention, the acrylic monomer(s) is polymerized in the non-insocyanate component of the polyurethane prepolymer and the latter then reacted with suitable isocyanate functionalities to form a hot melt adhesive composition having a suitable viscosity without the necessity for addition of plasticizers or tackifiers.

Hot melt adhesives are 100% solid materials which do not contain or require any solvents. They are solid materials at room temperature but, on application of heat, melt to a liquid or fluid state in which form they are applied to a substrate. On cooling, the adhesive regains its solid form and gains cohesive strength. In this regard, hot melt adhesives differ from other types of adhesives which achieve the solid state through evaporation or removal of solvents or by polymerization.

In order to obtain the required physical properties, most hot melt adhesives are formulated from thermoplastic materials which are applied molten at elevated temperatures and bond rapidly on cooling.

Unfortunately, their thermoplastic nature also results in a bond which is heat sensitive and which may fail where the bond is subjected to even moderate heat.

Hot melt adhesive compositions which are applied in molten form, cool to solidify and subsequently cure by a chemical crosslinking reaction have been prepared using specific thermosetting materials such as polyurethanes. These hot melts exhibit superior heat resistance but have little inherent strength and resemble a heavy balsam or grease prior to undergoing cross-linking. In addition, these polyurethane based hot melt adhesives lack adequate adhesion to many commercial substrates such as polyvinyl chloride film, mylar and aluminium. Attempts have been made to improve the initial adhesive strength of polyurethane hot melts by the addition of certain thermoplastic resins as taught, for example, in US-A 3 931 077. These thermoplastic resins are, however, generally high molecular weight (i.e., greater than about 100,000) materials so their addition appreciably raises the coating viscosity of the adhesive requiring the further addition of plasticizers or tackifiers in order to sufficiently reduce the viscosity so as to facilitate its application. While lowering the hot viscosity of the formulated adhesive, the addition of these plasticizing and tackifying components, in the relatively large amounts required, has a detrimental effect upon the adhesive properties of the polyurethane hot melt, particularly after aging of the bond.

GB-A 2 137 638 discloses substantially solvent free polyurethane adhesives containing a monofunctional reactant having a chemical group capable of reacting with NCO such as -OH or -NH. This teaching is solely directed to urethane prepolymers and further desires the addition of tackifiers and/or minor amounts of solvents. The compositions claimed in EP-A 0 118 171 are liquid and not hot melt adhesives. Ethylenically unsaturated monomers are polymerized to form a liquid polymer which is then reacted and becomes a portion of the urethane component. According to FR-A 2 299 350 mixtures of diisocyanates and polyester-polyols react at once and are used as moulding resins. FR-A 2 213 974 refers to hot melt adhesives containing urethane prepolymers and modifiers, such a terpene-phenol resins.

It is therefore an object of the present invention to provide an improved polyurethane hot melt adhesive composition characterized by superior initial adhesion to an unusually broad range of substrates as well as heat resistance even after aging of the bonds.

## Summary of the Invention

We have found that the addition of urethane prepolymers to low molecular weight polymers formed from ethylenically unsaturated monomers which do not contain active hydrogen, provides hot melt adhesives which are solid at room temperature and which can be readily coated at a viscosity of 3 to 50 Pa·s (3000 to 50,000 cps.) at 120°C without the need for additional tackifiers or plasticizers and which have improved initial cohesive strength as well as improved strength after aging of the cured bond. Moreover, the adhesives exhibit these improved properties on a wide range of substrates including difficult to bond substrates such as polyvinyl chloride, Mylar® (polyester film from DuPont) and aluminium.

The low molecular weight polymer may be added to the polyol prior to reaction with the isocyanate components or it may be added to the already formed prepolymer. Alternatively, the ethylenically unsaturated monomers may be polymerized in the polyol using free radical polymerization procedures. In this embodiment, the isocyanate components are subsequently polymerized with the mixture using conventional condensation polymerization procedures. This latter polymerization procedure has the advantage of excellent control of the molecular weight of the resulting vinyl polymer (as determined by intrinsic viscosity) and also produces a polymer which is free of detrimental impurities. In addition, the reduction in the handling and inventory of materials and elimination of intermediate packaging and storage bring about significant cost savings.

Detailed Description of The Preferred Embodiments

Any ethylenically unsaturated monomer capable of free radical polymerization and which does not contain active hydrogen may be used herein. Most commonly employed are the $C_1$ to $C_{12}$ esters of acrylic and methacrylic acids including, but not limited to methyl acrylate, ethyl acrylate, n-butyl acrylate, isobutyl acrylate, n-propyl or iso-propyl acrylate as well as the corresponding methacrylates. Mixtures of compatible (meth) acrylate monomers may also be used. Such mixtures, including mixtures of butyl and methyl methacrylate are well known in the art. Additional ethylenically unsaturated monomers such as vinyl esters (e.g., vinyl acetate and vinyl propionate), vinyl ethers, fumarates, maleates, styrene, acrylonitrile, ethylene, and vinyl ethers may be used as may copolymers thereof. The choice of the particular monomer(s) is largely dependent upon the desired end use of the adhesives. For example, one skilled in the art would recognize that selection of certain monomers will produce a pressure sensitive adhesive, while other monomers will give a non-pressure sensitive material. Similarly, appropriate monomers may be selected to formulate structural adhesives, conductive adhesives, etc.

The urethane prepolymers are those conventionally used in the production of polyurethane hot melt adhesive compositions. In general, the prepolymer is prepared by the condensation polymerization of a polyisocyanate with a polyol, preferably the polymerization of a diisocyanate with a diol. The polyols used include polyhydroxy ethers (substituted or unsubstituted polyalkylene ether glycols or polyhydroxy polyalkylene ethers), polyhydroxy polyesters, the ethylene or propylene oxide adducts of polyols and the mono-substituted esters of glycerol.

Any suitable organic polyisocyanate may be used such as, for example, ethylene diisocyanate, ethylidene diisocyanate, propylene diisocyanate, butylene diisocyanate, hexamethylene diisocyanate, toluene diisocyanate, cyclopentylene-1,3,-diisocyanate, cyclohexylene-1,4-diisocyanate, cyclohexylene-1,2-diisocyanate, 4,4'-diphenylmethane diisocyanate, 2,2-diphenylpropane-4,4'- diisocyanate, p-phenylene diisocyanate, m-phenylene diisocyanate, xylylene diisocyanate, 1,4-naphthylene diisocyanate, 1,5-naphthylene diisocyanate, diphenyl-4,4'-diisocyanate, azobenzene-4,4'-diisocyanate, diphenylsulphone-4,4'-diisocyanate, dichlorohexamethylene diisocyanate, furfurylidene diisocyanate, 1-chlorobenzene-2,4-diisocyanate, 4,4',4" -triisocyanato-triphenylmethane, 1,3,5-triisocyanato-benzene, 2,4,6-triisocyanato-toluene, 4,4'–dimethyldiphenylmethane-2,2',5,5-tetraisocyanate, and the like.

The polyisocyanate and polyol components are combined in proportions so as to yield a urethane prepolymer characterized by an isocyanate content of from 0.25 to 15%, preferably to 10%. In addition, the ratio of isocyanate equivalents to hydroxyl equivalents (known as the isocyanate index) should be greater than 1 but no more than 2. By maintaining the low isocyanate index, we are able to reduce the level of free isocyanate content in the final hot melt adhesive composition to less than 4%, preferably less than 1%. It will be recognized that the presence of higher levels of free isocyanate has a detrimental effect on a hot melt formulation since it causes toxic fumes to be released when the adhesive is heated to application temperature. The higher levels of free isocyanate may also cause reduction in viscosity and poorer initial bond strength of the adhesive. The precise amount of the polyisocyanate used in the polymerization will depend on the equivalent weight of the polyol, the amount of the polyol and the particular polyisocyanate employed. In general, the amount of the polyisocyanate needed to achieve the isocyanate content will vary from 5 to 55% of the final prepolymer.

In accordance with the broadest scope of the invention, the ethylenically unsaturated monomer may be polymerized using conventional free radical polymerization procedures to a relatively low molecular weight. For purposes of clarification herein, by "low molecular weight" we mean weights in the range of approximately 10,000 to 30,000. The low molecular weight is obtained by careful monitoring and controlling the reaction conditions and, generally, by carrying out the reaction in the presence of a chain transfer agent such as dodecyl mercaptan. There is a recognized correlation between intrinsic viscosity and molecular weight and we have found that, in general, monomers polymerized to an intrinsic viscosity of 0.1 to 0.4 (I.V. as measured in a 9:1 mixture of tetrahydrofuran and alcohol) are particularly preferred for use herein. In this embodiment, the low molecular weight polymer is then blended either with the polyol and dissolved therein prior to reaction with the isocyanate component or the low molecular weight polymer is dissolved in the already formed urethane prepolymer. In either case, low molecular weight polymer is combined with the isocyanate terminated urethane prepolymer in a proportion such that the reactive curing hot melt adhesive contains 5 to 90% of the urethane prepolymer and 95% to 10% of the low molecular weight polymer. Care should be taken in storing and handling the low molecular weight polymer to avoid contamination with ambient moisture or other factors which might affect the stability of the prepolymer system. The resultant hot melt adhesive may then be applied in molten form to the substrate to be bonded using techniques known to those skilled in the art. The urethane hot melt cures over time with ambient moisture to form a crosslinked network.

In accordance with an alternate method for preparing the urethane prepolymers of the invention, the ethylenically unsaturated monomers are combined in an amount of 2 to 90% by weight with 10 to 98% by weight of the polyol and polymerized therein using conventional free radical polymerization procedures in the presence of a chain transfer agent such as dodecyl mercaptan to achieve the low molecular weight polymer dissolved in the polyol. Subsequent to the polymerization of the ethylenically unsaturated monomer(s), the polyisocyanate and any additional ingredients required for the urethane prepolymer forming reaction are added and that reaction is carried out using conventional condensation polymerization procedures. In this manner, the resultant isocyanate terminated urethane prepolymer forms the reactive curing hot melt adhesive described above which contains 5 to 90% of the urethane prepolymer and 95 to 10% of the low molecular weight polymer which may be applied in molten form to the substrate and cured over time with ambient moisture to form a crosslinked network.

It is also possible to polymerize the low molecular weight polymer in the presence of the already formed isocyanate terminated urethane prepolymer. This method has the drawback of subjecting the prepolymer to unnecessary heating during the acrylic polymerization, heating that might result in branching, viscosity increase, depletion of needed isocyanate groups and possible gellation. Although these disadvantages are subject to control, more stringent control of conditions are required as compared to polymerization in the non-isocyanate functional urethane components. When the reaction is run in the polyol or other non-isocyanate containing component, there is also the advantage of lower reaction viscosities and reduced exposure to isocyanate vapors because of the lesser amount of heating required.

As discussed previously, the resultant hot melt adhesives which are solid at room temperature have appropriate coating viscosities within the range of 3 to 50 Pa·s (3000 to 50,000 cps) at 120°C (which corresponds to 1.5 to 25 Pa·s (1500 to 25,000 cps) at 135°C and 10 to 100 Pa·s (10,000 to 100,000 cps) at 108°C) and thus require no additional tackifiers and/or plasticizers in order to achieve these coating viscosities. It is noted, however, that small amounts of tackifiers or plasticizers may be added so long as their presence does not serve as a detriment to the desired adhesive properties.

Not only do the adhesives cure to form a strong heat resistant bond, they also exhibit high initial adhesive and cohesive strength so that the bonded structure, even before curing, can be readily handled and subjected to further processing operations. As such, they are readily adapted to a wide variety applications for which hot melt adhesives are commonly used, especially those applications which require a high degree of heat resistance as might be encountered in processing or sterilizing operations including, but not limited to, laminating, bookbinding, labelling of bottles and pouches, automotive interior assembly, fabrication of nonwoven products for medical uses, etc.

It is hypothesized that these superior properties are due, in part, to the formation of semi-interpenetrating and interpenetrating networks as well as, in some cases, the formation of graft copolymers. The semi-interpenetrating network would result when the urethane prepolymer (a thermoset) is used with a free radically polymerized polymer which contains no crosslinking groups (thermoplastic). When the free radically polymerized polymer contains crosslinking groups, a fully interpenetrating network will result. Grafting occurs with certain types of non-isocyanate functional urethane prepolymer components such as those containing a carbon atom bearing a tertiary hydrogen atom. Such tertiary hydrogen atoms are potential graft sites for the acrylic or vinyl monomers.

This invention can be further illustrated by the following examples of preferred embodiments thereof, although it will be understood that these examples are included merely for purposes of illustration and are not intended to limit the scope of the invention unless otherwise specifically indicated.

Example I

A one liter reaction vessel was set up equipped with a condenser, gas inlet tube, slow addition tube, thermometer, stirrer, and provisions for heating/cooling. The ingredients of the reaction consisted of the following:

| 1. | Polypropylene glycol (1000 mol. wt.) | 275.8 g |
|---|---|---|
| 2. | 1,6-hexane diol, neopentyl glycol adipate (3000 M.W.) | 88.9 g |
| 3. | 1,6-hexane diol, neopentyl glycol adipate (1000 M.W.) | 29.3 g |
| 4. | Butyl methacrylate | 17.8 g |
| 5. | Butyl methacrylate | 94.1 g |
| 6. | Methyl methacrylate | 9.4 g |
| 7. | Methyl methacrylate | 53.6 g |
| 8. | Dodecyl mercaptan | 0.68 g |
| 9. | Benzoyl peroxide | 1.7 g |
| 10. | Benzoyl peroxide | 0.6 g |
| 11. | Methylene bis phenyl diisocyanate | 131.1 g |

The reaction vessel was purged with dry nitrogen and a slow stream of dry nitrogen was bubbled subsurface throughout the reaction. Ingredients designated 1,2,3,4,6,8 and 9 were added to the vessel and the temperature raised to 80°C. After 1/2 h at 80°C ingredients 5 and 7 were added uniformly over a period of 1 h. The reaction was held at 80°C for an additional three hours, at which time 10 was added. The reaction was held an additional 2 h @ 80°C and 11 was added; then the temperature was raised to 100°C and held for three hours. At this point a vacuum of 120mm to 130mm was applied to the vessel for 20 minutes to 30 minutes and the reaction poured hot from the flask.

| Properties: | |
|---|---|
| % Methacrylate polymer | 25% |
| Ratio of butyl methacrylate to methyl methacrylate | 64 to 36 |
| % Urethane prepolymer | 75% |
| % isocyanate groups | 1.9% |
| Viscosity at 100°C | 64 Pa · s |
| Viscosity at 120°C | 25.250 Pa · s |
| Viscosity at RT | Solid |
| Intrinsic Viscosity in tetrahydrofuran/ethanol = 9/1 | 0.18 |
| Color | water white to very slightly amber |
| Clarity | clear to very slightly hazy |
| Calculated urethane prepolymer mol. wt. | 3315 mol. wt. |
| Isocyanate Index | 1.6 |

Example II

An experiment was run as in Example I where the viscosity of the system was lowered by reducing the molecular weight of the urethane prepolymer as an alternative method to that of reducing the molecular weigth of the methacrylate resin. All factors were the same except for the following:

| Ingredients: | A | B |
|---|---|---|
| Butyl methacrylate | 18.0 g | 18.0 g |
| Butyl methacrylate | 102.0 g | 102.0 g |
| Methyl methacrylate | 10.1 g | 10.1 g |
| Methyl methacrylate | 57.4 g | 57.4 g |
| Dodecyl mercaptan | 0.63 g | 0.72 g |
| Benzoyl peroxide | 1.8 g | 1.8 g |
| Methylene bis phenyldiisocynate | 168.6 g | 168.6 g |

The properties were:

| Properties: | A | B |
|---|---|---|
| % Methacrylate polymer | 25% | 25% |
| Ratios of butyl methacrylate to methylmethacrylate | 64 to 36 | 64 to 36 |
| % Urethane prepolymer | 75% | 75% |
| % isocyanate groups | 3.1% | 3.3% |
| Viscosity at 100°C | 53 Pa · s | 51 Pa · s |
| Viscosity at 120°C | not measured | 7.062 Pa · s |
| Viscosity at room temperature | Solid | Solid |
| Intrinsic viscosity in THF/ETOH = 9/1 | 0.18 | 0.15 |
| Color | water white to very slightly amber | |
| Clarity | clear to very slightly hazy | |
| Calculated urethane prepolymer molecular weight | 2032 mol. wt. | 1909 mol. wt. |
| Isocyanate Index | 2.0 | 2.0 |

Example III (Comparative)

This example discloses the preparation of a urethane prepolymer composed of a combination of 70% polypropylene glycol of molecular weight 1000 M.W. and 30% 1,6-hexane diol neopentyl glycol adipate diol of 2000 molecular weight with sufficient methylene bis phenyl diisocyanate to provide 2% NCO content in the prepolymer.

| Ingredients: | |
|---|---|
| Polypropylene glycol (1000 molecular weight) | 350.0 |
| 1,6-hexane diol neopentyl glycol adipate diol (2000 mol. wt.) | 150.0 |
| Methylene bis phenyl diisocyanate | 166.4 |

Procedure:

A one liter reaction vessel was equipped with a condenser, gas inlet tube, thermometer, stirrer, and provisions for heating and cooling. The reaction vessel was purged with dry nitrogen and a slow stream was bled trough the vessel. The polyols were added to the vessel and the temperature was raised to 80°C. At this point, the diisocyanate was added and the reaction was heated to 100°C and held at that temperature for 4 h. After the 4 h heating period, the reaction was poured hot from the vessel.

The properties of the urethane prepolymer were:

| Properties: | |
|---|---|
| % isocyanate groups | 2.3% |
| Viscosity at 100°C | 3.2 Pa · s |
| Viscosity at room temperature | 800 Pa · s |
| Color | very slightly amber |
| Clarity | clear |
| Isocyanate Index | 1.6 |

Example IV (Comparative)

This example is provided to illustrate the production of a hot melt adhesive according to U.S. Pat. No. 3 931 077 using a blend of a polyurethane prepolymer, a thermoplastic resin and a tackifier.

| Prepolymer from Example III | 60 |
| CRL 715 (a 35% n-butyl acrylate – 65% ethylene copolymer having a melt index of 70 from USI) | 5 |
| PRL-300 (a terpene phenolic resin having a softening point of 108°C from Reichhold Chemical) | 35 |

The urethane prepolymer was placed in a three-neck flask and heated to 75°C (167°F) under dry nitrogen gas, the two additional ingredients were added and stirred under nitrogen until dissolved. The adhesive was designated IVA.

A second hot melt adhesive (designated IVB) was formulated as above using 10 parts Exxon EX 170 (25% vinyl acetate, 75% ethylene with a melt index of 2400); 25 parts of the PRL-300 and 65 parts of the urethane prepolymer of Example III.

<u>Testing</u>

The following series of tests have been developed to characterize the adhesives of this invention and measure their effectiveness.

<u>Tensile and elongation of cured free films:</u> This test measures the strength of the film and its elasticity. The tensile strength and degree of elongation are related to a materials' utility as an adhesive. In general a material that possesses high tensile strength and appropriate elongation will show better adhesive performance than a material which is poor in one or both categories.

In this test, films were cast from the melt on a low energy surface at $7.62–12.7 \times 10^{-2}$ mm thickness. (Films in this range had to be used as heavier films developed excessive voids on curing.) The films were cured by exposing them to the atmosphere in a constant temperature room with 22°C and 50% R.H. for one week.

<u>Adhesion Test:</u> Samples where prepared using various flexible substrates by coating the substrate with $2.54 \times 10^{-2}$ mm of molten adhesive and immediately laminating to a 0.95 cm particle board by subjecting the lamination to 10 minutes in a cold press at approx 0.34 bar (5 psi) pressure. All samples were allowed 1 week to cure or crosslink. They were then subjected to a 90° peel test at a withdrawal rate of 30.48 cm per minute.

<u>Heat Resistance:</u> As most hot melts are thermoplastic and deform or flow when subjected to temperatures above 82°C., we have devised a series of shear tests at elevated temperatures, to measure resistance to flow or deformation at higher temperatures, up to 175°C.

In this test a lap shear of $12.7 \times 10^{-2}$ mm bare aluminum foil to 0.95 cm particle board with an adhesive application of $2.54 \times 10^{-2}$ mm is used. All samples were cured 1 week. The samples were placed in a circulating air oven at 108°C with a load of 1 kilogram per 6.45 cm². They were allowed to remain at this temperature for 15 min, then the temperature was elevated to 120°C and observed for 15 min and then again the temperature was elevated at regular intervals until failure was observed.

<u>Green Strength:</u> This test measures the bond immediately after application and bonding. This is important as it tests the strength of the uncured, material prior to curing. Sufficient green strength must be present to hold substrates together when combined, and while the cure develops with ambient moisture. Green strength or immediate bond strength prior to cure as well as rate of cure, is very important for the fabrication or lamination process prior to full cure.

In this test, the adhesive samples in molten condition at 120°C were coated at exactly $2.54 \times 10^{-2}$ mm thickness on $5.08 \times 10^{-2}$ mm® Mylar film and immediately nipped to $12.7 \times 10^{-2}$ mm aluminum foil. The resultant lamination of Mylar/Adhesive/Foil was then peeled immediately, and after the indicated times using an Instron tester at 30.48 cm/min.

Comparison of Viscosity at 120°C

| Example | Visc. @ 120°C (Thermocel) |
| --- | --- |
| I | 11.625 Pa · s |
| IIB | 5.5 Pa · s |
| III | 1.138 Pa · s |
| IVA | 9 Pa · s |
| IVB | 5 Pa · s |

Comparison of Tensile/Elongation

| Example | Ultimate Tensile | % Elongation |
|---------|-----------------|--------------|
| I | 94.5 kg/cm$^2$ (1,350 psi) | 460% |
| IIB | 227.5 kg/cm$^2$ (3,250 psi) | 440% |
| III | 46.7 kg/cm$^2$ (667 psi) | 440% |
| IVA | 67.2 kg/cm$^2$ (960 psi) | 520% |
| IVB | 14 kg/cm$^2$ (200 psi) | 1400% |

Note low tensiles in III and IV, and the increased tensile with good elongation of I and II which are examples of this invention. Also note higher tensile in II which correlates with higher NCO content.

Adhesion Test Results

| | $12.7 \times 10^{-2}$ mm Bare Alum Foil | $5.08 \times 10^{-2}$ mm Mylar | $15.24 \times 10^{-2}$ mm Woodgrain Vinyl | $15.16 \times 10^{-2}$ mm Embossed White Vinyl |
|---|---|---|---|---|
| Example I | 6.5* FT | 4.2* FT | 5.5* FT | 4.5* FT |
| Example IIA | 5.5* FT | 1.5* | 6.5* FT | 5.5* FT |
| Example III | 1.7* | 1.8* | 6.6* FT | 5.2* |
| Example IVA | 7.6* FT | 0.4* | 0.2* | 4.0* FT |
| Example IVB | 6.7* FT | 0.9* | 7.0* FT | 4.5* FT |

FT = fiber tear
* = × 0.454 kg

Examples I and II both gave excellent bonds to most substrates and Example I gave excellent adhesion to all substrates including Mylar®. Note failure was FT (fiber tear). The adhesive carried with it the top fibers of the particle board substrate. Example II lacked adhesion only to Mylar®. Example III lacked adhesion to foil and Mylar®; Example IVA to Mylar® and vinyl and Example IVB to Mylar®.

Comparison of Heat Resistance

| Example | 108°C | 120°C | 134°C | 150°C | 162°C | 175°C |
|---------|-------|-------|-------|-------|-------|-------|
| I | OK | OK | OK | OK | 13 minutes to fail | — |
| II (A & B) | OK | OK | OK | OK | OK | 8 hours |
| III | OK | OK | OK | 9 minutes to fail | — | — |
| IVA | 1 minute to fail | — | — | — | — | — |
| IVB | 1 minute to fail | — | — | — | — | — |

This test illustrates the poor heat resistance of Examples IVA and IVB (examples of the prior art) and the superior heat resistance of Example I and II, with Example II the high NCO type, giving the best heat resistance.

Comparison of Bond Strength

|  | Example I | Example II(A) | Example III | Example IVA | Example IVB |
|---|---|---|---|---|---|
| Immediate (green) | 300 g | 170 g | 20 g | 120 g | 2100 g |
| 1 hour | 375 g | 170 g | 25 g | 205 g | 1800 g |
| 2 hours | 375 g | 172 g | 65 g | 206 g | 1850 g |
| 3 hours | 363 g | 180 g | 125 g | 375 g | 1800 g |
| 24 hours | 1200 g | 680 g | 700 g | 425 g | 1900 g |
| 48 hours | 1200 g | N/T | N/T | 272 g | 908 g |
| 1 week | 1500 g | N/T | N/T | 91 g | 771 g |

N/T = Not Tested

The above test results clearly indicate the superior properties of the hot melts of the present invention over the prepolymer with no acrylic added and also over the material covered in US-A 3 931 077 with respect to bond strength and heat resistance particularly after aging.

The following examples incorporate modifications of our most preferred embodiment so as to illustrate various aspects of the invention.

Example V

The procedure of Example I was repeated except that 0.8 g dodecyl mercaptan was used instead of 0.68 g. This change was made to reduce the molecular weight (as indicated by a lower intrinsic viscosity) of the methacrylate copolymer portion of the product and thus reduce the viscosity of the product.

The properties were:

| Properties: | |
|---|---|
| % Methacrylate polymer | 25% |
| Ratio of butyl methacrylate to methyl methacrylate | 64 to 36 |
| % Urethane prepolymer | 75% |
| % isocyanate groups | 2.0% |
| Viscosity at 100°C | 18 Pa · s |
| Viscosity at room temperature | Solid |
| Intrinsic viscosity in tetrahydrofuran/ethanol = 9/1 | 0.15 |
| Color | water white to very slightly amber |
| Clarity | clear to very slightly hazy |
| Isocyanate Index | 1.6 |

Example VI

An experiment was run as in Example I except that the docedyl mercaptan chain transfer agent was decreased to 0.54 g in order to increase the molecular weight of the methacrylate polymer and thus increase the viscosity as compared to Example II.

The properties were:

| Properties: | |
| --- | --- |
| % Methacrylate polymer | 25% |
| Ratio of butyl methacrylate to methyl methacrylate | 64 to 36 |
| % Urethane prepolymer | 75% |
| % isocyanate groups | 3.0% |
| Viscosity at 100°C | 72 Pa · s |
| Viscosity at 120°C | 16 Pa · s |
| Viscosity at room temperature | Solid |
| Intrinsic viscosity in THF/ETOH = 9/1 | 0.15 |
| Color | water white to very slightly amber |
| Clarity | clear to very slightly hazy |
| Isocyanate Index | 1.6 |

Example VII

The following example represents a variations of Example I in the following significant areas:
1) Change in ratio of methacrylate polymer to urethane prepolymer from 25/75 to 30/70.
2) Change in ratio of butylmethacrylate to methyl methacrylate from 64/36 to 80/20.
3) Change in composition of the urethane prepolymer from polypropylene glycol/1,6-hexane diol, neopentyl glycol adipate-methylene bis phenyl diisocyanate to polypropylene glycol-methylene bis phenyl diisocyanate.
This example was run as in Example I except that the following amounts were used.

| Ingredients: | |
| --- | --- |
| Polypropylene glycol (1000 mol. wt.) | 300.3 |
| Butyl methacrylate | 23.0 |
| Butyl methacrylate | 130.6 |
| Methyl methacrylate | 5.8 |
| Methyl methacrylate | 32.6 |
| Dodecyl mercaptan | 0.3 g |
| Benzoyl peroxide | 1.9 g |
| Benzoyl peroxide | 0.6 g |
| Methylene bis phenyl diisocyanate | 147.8 g |

The properties were:

| Properties: | |
| --- | --- |
| % Methacrylate polymer | 300% |
| Ratio of butyl methacrylate to methyl methacrylate | 80 to 20 |
| % urethane prepolymer | 70.0% |
| % isocyanate groups | 3.9% |
| Viscosity at 100°C | 104 Pa · s |
| Viscosity at room temperature | Solid |
| Intrinsic viscosity in THF/ETOH = 9/1 | 0.19 |
| Color | water white |
| Clarity | clear to very slightly hazy |
| Isocyanate Index | 2.0 |

## Example VIII

The following example illustrates the use of a different acrylate monomer. The example was run as in Example I but with the ingredients as noted below.

| Ingredients: | |
| --- | --- |
| Polypropylene glycol (mol. wt. 1000) | 326.4 g |
| Butyl acrylate | 150.0 g |
| Dodecyl mercaptan | 0.3 g |
| Benzoyl peroxide | 2.0 g |
| Methylene bis phenyl diisocyanate | 122.8 g |

| Properties: | |
| --- | --- |
| % Acrylate polymer | 25.0% |
| % Urethane prepolymer | 75.0% |
| % isocyanate groups | 1.7% |
| Viscosity at 100°C | 7.200 Pa · s |
| Viscosity at room temperature | $>2.8 \times 10^6$ |
| Intrinsic viscosity in THF/ETOH = 9/1 | 0.15 |
| Color | lt. brown |
| Clarity | opaque |
| Isocyanate Index | 1.5 |

## Example IX

In this example, an isocyanate other than methylene bis phenyl diisocyanate was used. The example was run as in Example I but with the ingredients noted below.

| Formula | g |
| --- | --- |
| Polypropylene glycol (1000 mol. wt.) | 275.7 |
| 1,6-hexane diol, neopentyl adipate diol (2000 mol. wt.) | 118.2 |
| Butyl methacrylate | 17.8 |
| Butyl methacrylate | 94.1 |
| Methyl methacrylate | 9.1 |
| Methyl methacrylate | 53.6 |
| Dodecyl mercaptan | 0.68 |
| Benzoyl peroxide | 1.7 |
| Benzoyl peroxide | 0.6 |
| Methylene bis cyclohexyl diisocyanate | 137.4 |
| Dibutyl tin dilaurate | 0.08 |

| Properties: | |
| --- | --- |
| % Methacrylate polymer | 25% |
| Ratio of butyl methacrylate to methyl methacrylate | 64–36 |
| % Urethane prepolymer | 75% |
| % Isocyanate groups | 2.2% |
| Viscosity at 120°C | 5 Pa · s (est) |
| Viscosity at RT | Solid |
| Intrinsic viscosity in tetrahydrofuran/ethanol = 9/1 | .13 |
| Color | water white |
| Clarity | clear |
| Isocyanate Index | 1.6 |

Example X

In this example, a catalyst was added to accelerate the cure speed. Again, the reaction was run using the procedure of Example I.

| Formula | g |
| --- | --- |
| Polypropylene glycol (1000 mol. wt.) | 275.7 |
| 1,6-hexane diol, neopentyl adipate diol (2000 mol. wt.) | 118.2 |
| Butyl methacrylate | 17.8 |
| Butyl methacrylate | 94.1 |
| Methyl methacrylate | 9.4 |
| Methyl methacrylate | 53.6 |
| Dodecyl mercaptan | 0.68 |
| Benzoyl peroxide | 1.7 |
| Benzoyl peroxide | 0.6 |
| Methylene bis phenyl diisocyanate | 131.1 |
| Dibutyl tin dilaurate | 0.30 |

| Properties: | |
| --- | --- |
| % Methacrylate polymer | 25% |
| Ratio of butyl methacrylate to methyl methacrylate | 64 to 36 |
| % Urethane prepolymer | 75% |
| % Isocyanate groups | 1.9% |
| Viscosity at 100°C | 84 Pa · s |
| Viscosity at RT | Solid |
| Intrinsic viscosity in tetrahydrofuran/ethanol = 9/1 | .17 |
| Color | water white to very slightly amber |
| Clarity | clear to very slightly hazy |
| Isocyanate Index | 1.6 |

Example XI

In this example, the procedure of Example I was repeated with the acrylate comonomers replaced by styrene. The ingredients and properties follow.

12

| Ingredients: | g |
|---|---|
| Polypropylene glycol (1000 mol. wt.) | 275.7 |
| 1,6-hexane diol, neopentyl adipate diol (2000 mol. wt.) | 118.2 |
| Styrene | 174.9 |
| Dodecyl mercaptan | 0.68 |
| Benzoyl peroxide | 1.7 |
| Benzoyl peroxide | 0.6 |
| Methylene bis phenyl diisocyanate | 131.1 |

| Properties: | |
|---|---|
| % Styrene polymer | 25% |
| % Urethane prepolymer | 75% |
| % Isocyanate groups | 1.7 |
| Viscosity at RT | Solid |
| Intrinsic viscosity in tetrahydrofuran/ethanol = 9/1 | 0.23 |
| Color | sl. yellow |
| Clarity | cloudy |
| Isocyanate Index | 1.6 |

Example XII

Again, the procedures of Example I was repeated with the acrylate copolymer replaced by vinyl acetate. The ingredients and properties follow.

| Ingredients: | g |
|---|---|
| Polypropylene glycol (1000 mol. wt.) | 275.7 |
| 1,6-hexane diol, neopentyl adipate diol (2000 mol. wt.) | 118.2 |
| Vinyl acetate | 174.9 |
| Dodecyl mercaptan | 0.68 |
| Benzoyl peroxide | 1.7 |
| Benzoyl peroxide | 0.6 |
| Methylene bis phenyl diisocyanate | 137.4 |

| Properties: | |
|---|---|
| % Vinyl acetate polymer | 25% |
| % Urethane prepolymer | 75% |
| % Isocyanate groups | 2.0 |
| Viscosity at 121°C | 1.8 Pa · s |
| Viscosity at RT | $>4 \times 10^3$ Pa · s |
| Intrinsic viscosity in tetrahydrofuran/ethanol = 9/1 | 0.15 |
| Color | sl. amber |
| Clarity | cloudy |
| Isocyanate Index | 1.6 |

Example XIII

This example illustrates the addition of a commercially available low molecular weight polymer to the urethane prepolymer to produce a hot melt adhesive in accordance with an alternate embodiment of the present invention. Elvacite 2013 is a 64% butylmethacrylate/36% methylmethacrylate copolymer of I.V. 0.2 available from DuPont. The Elvacite was vacuum dried in a desicator for 24 hours immediately prior to use herein.

| Ingredients: | |
| --- | --- |
| Polypropylene Glycol (1000 mol. wt.) | 472.9 g |
| 1,6-hexanediol neopentyl glycol adipate (2000 mol. wt.) | 202.7 |
| Elvacite 2013 | 300.0 |
| Methylene bisphenyl diisocyanate | 224.9 |

Procedure:

The polyols and the Elvacite 2013 were added to the vessel and heated to 100°C until the Elvacite was dissolved. At that point the methylene bisphenyl diisocyanate was added, and the reaction was held at 100°C for 3 hrs. After the 3 hours at 100°C the reaction was poured hot from the vessel. The samples had the following properties:

| Properties: | |
| --- | --- |
| % Methylacrylate polymer | 25% |
| % Urethane prepolymer | 75% |
| % Isocyanate groups | 2.0% |
| Viscosity at 100°C | 86 Pa · s |
| Viscosity at 120°C | 8 Pa · s |
| Viscosity at room temperature | Solid |
| Intrinsic Viscosity in THF/ETOH | 0.25 |
| Color | water white |
| Clarity | clear to very slightly hazy |
| Isocyanate Index | 1.6 |

| Test Results | |
|---|---|
| Ultimate Tensile Strength | 119.5 kg/cm$^2$ (1700 psi) |
| % Elongation | 400% |
| Viscosity Stability at 120°C: | |
| initial | 8 Pa · s |
| after 8 hours | 12.125 Pa · s |
| Bond Strength (foil/mylar): | |
| immediate | 908 g |
| 1 hour | 1025 g |
| 2 hours | 1040 g |
| 3 hours | 1100 g |
| 24 hours | 1750 g |
| Adhesion test (90°C peel): | |
| Mylar | 0.77 kg |
| 12.7 × 10$^{-2}$ mm foil | 2.5 kg |
| Woodgrain vinyl | 3.130 kg $^{FT}$ |
| white vinyl | 2.59 kg $^{FT}$ |
| Heat Resistance (0.14 kg/cm$^2$) (2 psi): | |
| 180°C | OK |
| 120°C | OK |
| 134°C | OK |
| 150°C | OK |
| 162°C | 10 minutes to failure |

Example XIV

For the purposes of comparison of initial (green) strength properties, additional adhesives (designated 1–4) were prepared according to the invention using the procedures discussed previously. Five other adhesives were prepared following Examples II, III, IV, V and IX, (respectively designated 5–9), of US-A 3 968 089.

The components and amounts (in grams) of raw materials utilized are shown in Table I.

The intrinsic viscosities, isocyanate index and viscosity and room temperature were determined and are shown in Table II.

Table II

| Adhesive | Intrinsic Viscosity (I.V.) | Isocyanate Index (1.1) | Viscosity at Room Temp. (Pa · s) |
|---|---|---|---|
| 1 | 0.11 | 1.9 | Solid |
| 2 | 0.18 | 1.6 | Solid |
| 3 | 0.15 | 1.6 | Solid |
| 4 | 0.17 | 1.6 | Solid |
| 5 | 0.09 | 12.9 | 74 |
| 6 | 0.09 | 12.0 | 17.44 |
| 7 | 0.07 | 16.5 | 1.96 |
| 8 | 0.09 | 21.1 | 1.52 |
| 9 | 0.09 | 13.1 | 31 |

The following test procedures were used to determine the initial (green) strength performance of the adhesives. Results of the testing are shown in Table III.

Peel Test Wood-grained vinyl substrate was coated with 2.54–3.81×10$^{-2}$ mm thickness of adhesive heated @ approx. 120°C (direct or transfer) and pressed together with 0.95 cm (3/8") thickness particle board 3–5 sec in a press @ 2.27 kg. The sample was peeled at 90° in a peel tester e.g. Instron Tester at rate of 12.7 cm/min (Sample dimension = 1.27 cm width strip 1.9 cm length). The sample was peeled immediately from press i.e., within 1–2 minutes.

Lap Shear 12.7×10⁻² mm gauge aluminum was coated with 5.03–7.62×10⁻² mm thickness of adhesive heated at approx. 120°C (direct or transfer). The coated aluminum was pressed together with 0.95 cm thickness particle board 3–5 s. in a press at approx. 2.27 kg (5 lbs). The sample was pulled at 180° in a tensile tester (e.g. Instron Tester) at rate of 0.51 cm per minute. (Sample dimension 1.27 cm×1.27 cm bond area.) The sample was pulled immediately from press i.e., within 1–2 minutes.

Table III

| Adhesive | Peel (lbs./in.) (kg/cm$^2$) | Lap Shear (lbs./in.) (kg/cm$^2$) |
|---|---|---|
| 1 | (4.2–4.4) 0.29–0.31 | (31.5) 2.21 |
| 2 | (4.0–4.0) 0.28–0.28 | (18.2) 1.27 |
| 3 | (1.0–1.1) 0.07–0.08 | (9.3) 0.65 |
| 4 | (1.4–1.7) 0.1–0.12 | (15.1) 1.06 |
| 5 | No Initial Bond | No Initial Bond |
| 6 | No Initial Bond | No Initial Bond |
| 7 | No Initial Bond | No Initial Bond |
| 8 | No Initial Bond | No Initial Bond |
| 9 | No Initial Bond | No Initial Bond |

It will be apparent that various changes and modifications may be made in the embodiments of the invention described above, without departing from the scope of the invention, as defined in the appended claims, and it is intended therefore, that all matter contained in the foregoing description shall be interpreted as illustrative only and not as limitative of the invention.

Table I

| Adhesive | Isocyanate | Amt. | Polyols Polyester | Amt. | Polyether | Amt. | Resin or Monomers | Amt. |
|---|---|---|---|---|---|---|---|---|
| 1[A] | Methylene Bis Phenyl Diisocyanate | 84.0 | 1,6-Hexane Diol Neopentyl Glycol Adipate 2000 MW | 350.0 | – | | Ethylmethyl- acrylate Copolymer | 144.7 |
| 2[B] | Methylene Bis Phenyl Diisocyanate | 112.5 | 1,6-Hexane Diol Neopentyl Glycol Adipate 2000 MW | 101.4 | Polypropylene Glycol 1000 MW | 236.5 | Methyl/butyl Methacrylate Copolymer | 150.0 |
| 3[B] | Methylene Bis Phenyl Diisocyanate | 133.7 | 1,6-Hexane Diol Neopentyl Glycol Adipate 2000 MW | 118.2 | Polypropylene Glycol 1000 MW | 275.7 | Methyl Methacrylate Butyl Methacrylate | 63.0 111.9 |
| 4[D] | Methylene Bis Phenyl Diisocyanate | 133.7 | 1,6-Hexane Diol Neopentyl Glycol Adipate 2000 MW | 118.2 | Polypropylene Glycol 1000 MW | 275.7 | Methyl Methacrylate Butyl Methacrylate | 63.0 111.9 |
| 5 | Polymethylene Polyphenyl Polyisocyanate | 199.8 | – | – | Polyethylene Polypropylene Triol 5500 MW | 200.0 | Styrene Acrylonitrile | 15.0 15.0 |
| 6 | Polymethylene Polyphenyl Polyisocyanate | 225.0 | – | – | Polyethylene Polypropylene Triol 5500 MW | 225.0 | Styrene Acrylonitrile | 25.0 25.0 |
| 7 | Isophorone Diisocyanate | 450.0 | | | Polyethylene Polypropylene Triol 5500 MW | 450.0 | Styrene Acrylonitrile | 50.0 50.0 |
| 8 | Toluene Diisocyanate | 450.0 | – | – | Polyethylene Polypropylene Triol 5500 MW | 450.0 | Styrene Acrylonitrile | 50.0 50.0 |
| 9 | Polymethylene Polyphenyl Polyisocyanate | 450.0 | – | – | Polyethylene Polypropylene Triol 4000 MW | 450.0 | Styrene Acrylonitrile | 50.0 50.0 |

(A) Procedure of Example XIII
(B) A repeat of Example XIII
(C) Similar to Example I
(D) Resin polymerized in prepolymer using 1.4 grams benzoyl peroxide, 3.5 grams azobisisobutyronitrile, and 1.4 grams acetyl peroxide as initiator and 0.68 grams dodecyl mercaptan as a chain transfer agent.

EP 0 246 473 B1

**Claims**

1. A solvent-free hot melt polyurethane adhesive composition which is solid at room temperature comprising:

a) 5 to 90% by weight of a urethane prepolymer prepared from the condensation polymerization of a polyisocyanate and a polyol and having an isocyanate content of 0.25 to 15% and an isocyanate index greater than 1 and no more than 2;

b) 10 to 95% by weight of a low molecular weight polymer of ethylenically unsaturated monomers containing no active hydrogen; said hot melt adhesive formulation being characterized, in the absence of tackifiers and/or plasticizers, by a viscosity of 3 to 50 Pa.s (3000 to 50,000 cps) at 120°C.

2. The hot melt adhesive composition of claim 1 wherein the ethylenically unsaturated monomer is selected from the group consisting of $C_1$ to $C_{12}$ esters of acrylic and methacrylic acid, vinyl esters and ethers, fumarates, maleates, styrene, acrylonitrile, ethylene and mixtures thereof.

3. The hot melt adhesive composition of claim 1 wherein the urethane prepolymer is prepared from the condensation polymerization of a diol and a diisocyanate.

4. The hot melt adhesive composition of claim 1 wherein the ethylenically unsaturated monomers are polymerized to an intrinsic viscosity of 0.1 to 0.4.

5. The hot melt adhesive composition of claim 1 wherein the polyol is selected from the group consisting of substituted or unsubstituted polyalkylene ether glycols or polyhydroxy polyalkylene ethers, polyhydroxy polyesters, the ethylene or propylene oxide adducts of polyols and the mono-substituted esters of glycerol.

6. The hot melt adhesive composition of claim 1 wherein the polyisocyanate is selected from the group consisting of ethylene diisocyanate, ethylidene diisocyanate, propylene diisocyanate, butylene diisocyanate, hexamethylene diisocyanate, toluene diisocyanate, cyclopentylene-1,3-diisocyanate, cyclohexylene-1,4-diisocyanate, cyclohexylene-1,2-diisocyanate, 4,4'-diphenylmethane diisocyanate, 2,2-diphenylpropane-4,4'- diisocyanate, p-phenylene diisocyanate, m-phenylene diisocyanate, xylylene diisocyanate, 1,4-naphthylene diisocyanate, 1,5-naphthylene diisocyanate, diphenyl-4,4'-diisocyanate, azobenzene-4,4'-diisocyanate, diphenylsulphone-4,4'-diisocyanate, dichlorohexamethylene diisocyanate, furfurylidene diisocyanate, 1-chlorobenzene-2,4-diisocyanate, 4,4',4"-triisocyanato-triphenylmethane, 1,3,5-triisocyanato-benzene, 2,4,6-triisocyanato-toluene and 4,4'-dimethyldiphenylmethane-2,2',5,5-tetraisocyanate.

7. The hot melt adhesive composition of claim 1 wherein the free isocyanate content is less than 4%.

8. The hot-melt adhesive composition of claim 7 wherein the free isocyanate content is less than 1%.

9. A solvent-free hot melt adhesive polyurethane composition which is solid at room temperature comprising an isocyanate terminated polyurethane prepolymer containing polymerized therein a low molecular weight polymer of an ethylenically saturated resin wherein the isocyanate terminated polyurethane prepolymer has an isocyanate content of from 0.25 to 15% and an isocyanate index greater than 1 and no more than 2; said adhesive prepared by the steps of:

1) combining 2 to 90% by weight of an ethylenically unsaturated monomer containing no active hydrogen and 10 to 98% by weight of a polyol;

2) polymerizing the mixture of (1) using free radical polymerization procedures with chain transfer agents to achieve a low molecular weight polymer;

3) adding thereto sufficient polyisocyanate to yield the desired isocyanate content and isocyanate index and polymerizing using condensation polymerization procedures.

10. The hot melt adhesive composition of claim 9 wherein the ethylenically unsaturated monomer is selected from the group consisting of $C_1$ to $C_{12}$ esters of acrylic and methacrylic acid, vinyl esters and ethers, fumarates, maleates, styrene, acrylonitrile, ethylene and mixtures thereof.

11. The hot melt adhesive composition of claim 9 wherein the urethane prepolymer is prepared from the condensation polymerization of a diol and a diisocyanate.

12. The hot melt adhesive composition of claim 9 wherein the ethylenically unsaturated monomers are polymerized to an intrinsic viscosity of 0.1 to 0.4.

13. The hot melt adhesive composition of claim 9 wherein the polyol is selected from the group consisting of substituted or unsubstituted polyalkylene ether glycols or polyhydroxy polyalkylene ethers, polyhydroxy polyesters, the ethylene or propylene oxide adducts of polyols and the mono-substituted esters of glycerol.

14. The hot melt adhesive composition of claim 9 wherein the polyisocyanate is selected from the group consisting of ethylene diisocyanate, ethylidene diisocyanate, propylene diisocyanate, butylene diisocyanate, hexamethylene diisocyanate, toluene diisocyanate, cyclopentylene-1,3,-diisocyanate, cyclohexylene-1,4-diisocyanate, cyclohexylene-1,2-diisocyanate, 4,4'-diphenylmethane diisocyanate, 2,2-diphenylpropane-4,4'-diisocyanate, p-phenylene diisocyanate, m-phenylene diisocyanate, xylylene diisocyanate, 1,4-naphthylene diisocyanate, 1,5-naphthylene diisocyanate, diphenyl-4,4'-diisocyanate, azobenzene-4,4'-diisocyanate, diphenylsulphone-4,4'-diisocyanate, dichlorohexamethylene diisocyanate, furfurylidene diisocyanate, 1-chlorobenzene-2,4-diisocyanate, 4,4',4"-triisocyanato-triphenylmethane, 1,3,5-triisocyanato-benzene, 2,4,6-triisocyanato-toluene and 4,4'-dimethyldiphenylmethane-2,2',5,5-tetraisocyanate.

15. The hot melt adhesive composition of claim 9 wherein the free isocyanate content is less than 4%.

16. The hot-melt adhesive composition of claim 15 wherein the free isocyanate content is less than 1%.

17. A process for the production of a solvent-free hot melt polyurethane adhesive composition which is solid at room temperature characterized, in the absence of added tackifiers or plasticizers, by a viscosity of 3 to 50 Pa.s (3000 to 50,000 cps) at 120°C, comprising the steps of:

1) combining 2 to 90% by weight of an ethylenically unsaturated monomer containing no active hydrogen and 10 to 98% by weight of a polyol;

2) polymerizing the mixture of (1) using free radical polymerization procedures with chain transfer agents to achieve a low molecular weight polymer;

3) adding thereto sufficient polyisocyanate to yield an isocyanate content of 0.25 to 15% and an isocyanate index greater than 1 and less than 2 and polymerizing using condensation polymerization procedures.

**Patentansprüche**

1. Lösungsmittelfreie Polyurethan-Heißschmelzklebstoffzusammensetzung, die bei Raumtemperatur fest ist und umfaßt:

a) 5 bis 90 Gew.-% eines Urethanvorpolymers, hergestellt durch Kondensationspolymerisation eines Polyisocyanats und eines Polyols und mit einem Isocyanatgehalt von 0,25 bis 15% und einem Isocyanat-Index größer als 1 und nicht über 2;

b) 10 bis 95 Gew.-% eines niedrigmolekularen Polymers von ethylenisch ungesättigten Monomeren, die keinen aktiven Wasserstoff enthalten, wobei die Heißschmelzklebstofformulierung in Abwesenheit von Klebrigmachern und/oder Weichmachern gekennzeichnet ist durch eine Viskosität von 3 bis 50 Pa.s (3000 bis 50000 cps) bei 120°C.

2. Heißschmelzklebstoffzusammensetzung nach Anspruch 1, worin das ethylenisch ungesättigte Monomer aus der aus $C_1$-bis $C_{12}$-Estern der Acryl- und Methacrylsäure, Vinylestern und -ethern, Fumaraten, Maleaten, Styrol, Acrylnitril, Ethylen und Mischungen derselben bestehenden Gruppe ausgewählt ist.

3. Heißschmelzklebstoffzusammensetzung nach Anspruch 1, worin das Urethanvorpolymer durch Kondensationspolymerisation eines Diols und eines Diisocyanats hergestellt ist.

4. Heißschmelzklebstoffzusammensetzung nach Anspruch 1, worin die ethylenisch ungesättigten Monomeren bis auf eine Grenzviskositätszahl von 0,1 bis 0,4 polymerisiert sind.

5. Heißschmelzklebstoffzusammensetzung nach Anspruch 1, worin das Polyol aus der aus substituierten oder unsubstituierten Polyalkylenetherglykolen oder Polyhydroxypolyalkylenethern, Polyhydroxypolyestern, den Ethylen- oder Propylenoxid-Addukten von Polyolen und den monosubstituierten Estern von Glycerin bestehenden Gruppe ausgewählt ist.

6. Heißschmelzklebstoffzusammensetzung nach Anspruch 1, worin das Polyisocyanat aus der aus Ethylendiisocyanat, Ethylidendiisocyanat, Propylendiisocyanat, Butylendiisocyanat, Hexamethylendiisocyanat, Toluoldiisocyanat, Cyclopentylen-1,3-diisocyanat, Cyclohexylen-1,4-diisocyanat, Cyclohexylen-1,2-diisocyanat, 4,4'-Diphenylmethan-diisocyanat, 2,2-Diphenylpropan-4,4'-diisocyanat, p-Phenylen-diisocyanat, m-Phenylen-diisocyanat, Xylylen-diisocyanat, 1,4-Naphthylen-diisocyanat, 1,5-Naphthylen-diisocyanat, Diphenyl-4,4'-diisocyanat, Azobenzol-4,4'-diisocyanat, Diphenylsulfon-4,4'-diisocyanat, Dichlorhexamethylen-diisocyanat, Furfuryliden-diisocyanat, 1-Chlorbenzol-2,4-diisocyanat, 4,4',4''-Triisocyanato-triphenylmethan, 1,3,5-Triisocyanato-benzol, 2,4,6-Triisocyanato-toluol und 4,4'-Dimethyldiphenylmethan-2,2',5,5-tetraisocyanat bestehenden Gruppe ausgewählt ist.

7. Heißschmelzklebstoffzusammensetzung nach Anspruch 1, worin der freie Isocyanatgehalt weniger als 4% beträgt.

8. Heißschmelzklebstoffzusammensetzung nach Anspruch 7, worin der freie Isocyanatgehalt weniger als 1% beträgt.

9. Lösungsmittelfreie Polyurethan-Heißschmelzklebstoffzusammensetzung, die bei Raumtemperatur fest ist und ein Polyurethanvorpolymer mit endständigen Isocyanatgruppen umfaßt, das darin ein niedrigmolekulares Polymer eines ethylenisch ungesättigten Harzes polymerisiert enthält, worin das Polyurethanvorpolymer mit Isocyanatendgruppen einen Isocyanatgehalt von 0,25 bis 15% und einen Isocyanat-Index größer als 1 und nicht größer als 2 hat, wobei dieser Klebstoff hergestellt ist durch die Stufen:

1) Kombinieren von 2 bis 90 Gew.-% eines ethylenisch ungesättigten, keinen aktiven Wasserstoff enthaltenden Monomers und 10 bis 98 Gew.-% eines Polyols,

2) Polymerisieren der Mischung von (1) unter Anwendung von (freien) Radikalpolymerisationsverfahren mit Kettenübertragungsmitteln zur Erzielung eines niedrigmolekularen Polymers,

3) Zugabe von ausreichend Polyisocyanat, um den gewünschten Isocyanatgehalt und Isocyanat-Index zu erzielen, und Polymerisieren unter Anwendung von Kondensationspolymerisationsverfahren.

10. Heißschmelzklebstoffzusammensetzung nach Anspruch 9, worin das ethylenisch ungesättigte Monomer aus der aus $C_1$-bis $C_{12}$-Estern der Acryl- und Methacrylsäure, Vinylestern und -ethern, Fumaraten, Maleaten, Styrol, Acrylnitril, Ethylen und Mischungen derselben bestehenden Gruppe ausgewählt ist.

11. Heißschmelzklebstoffzusammensetzung nach Anspruch 9, worin das Urethanvorpolymer durch Kondensationspolymerisation eines Diols und eines Diisocyanats hergestellt ist.

12. Heißschmelzklebstoffzusammensetzung nach Anspruch 9, worin die ethylenisch ungesättigten Monomeren auf eine Grenzviskositätszahl von 0,1 bis 0,4 polymerisiert sind.

13. Heißschmelzklebstoffzusammensetzung nach Anspruch 9, worin das Polyol aus der aus substituierten oder unsubstituierten Polyalkylenetherglykolen oder Polyhydroxypolyalkylenethern, Polyhydroxypolyestern, den Ethylen- oder Propylenoxid-Addukten von Polyolen und den monosubstituierten Estern von Glycerin bestehenden Gruppe ausgewählt ist.

14. Heißschmelzklebstoffzusammensetzung nach Anspruch 9, worin das Polyisocyanat aus der aus Ethylendiisocyanat, Ethylidendiisocyanat, Propylendiisocyanat, Butylendiisocyanat, Hexamethylendiisocyanat, Toluoldiisocyanat, Cyclopentylen-1,3-diisocyanat, Cyclohexylen-1,4-diisocyanat, Cyclohexylen-1,2-diisocyanat, 4,4'-Diphenylmethan-diisocyanat, 2,2-Diphenylpropan-4,4'-diisocyanat, p-Phenylen-diisocyanat, m-Phenylen-diisocyanat, Xylylen-diisocyanat, 1,4-Naphthylen-diisocyanat, 1,5-Naphthylen-diisocyanat, Diphenyl-4,4'-diisocyanat, Azobenzol-4,4'-diisocyanat, Diphenylsulfon-4,4'-diisocyanat, Dichlorhexamethylen-diisocyanat, Furfuryliden-diisocyanat, 1-Chlorbenzol-2,4-diisocyanat, 4,4',4''-Triisocyanato-triphenylmethan, 1,3,5-Triisocyanato-benzol, 2,4,6-Triisocyanato-toluol und 4,4'-Dimethyldiphenylmethan-2,2',5,5-tetraisocyanat bestehenden Gruppe ausgewählt ist.

15. Heißschmelzklebstoffzusammensetzung nach Anspruch 9, worin der freie Isocyanatgehalt weniger als 4% beträgt.

16. Heißschmelzklebstoffzusammensetzung nach Anspruch 15, worin der freie Isocyanatgehalt weniger als 1% beträgt.

17. Verfahren zur Herstellung einer lösungsmittelfreien Polyurethan-Heißschmelzklebstoffzusammensetzung, die bei Raumtemperatur fest ist und durch eine Viskosität von 3 bis 50 Pa.s (3000 bis 50000 cps) bei 120°C in Abwesenheit von zugefügten Klebrigmachern oder Weichmachern gekennzeichnet ist, das die Stufen umfaßt:

1) Kombinieren von 2 bis 90 Gew.-% eines ethylenisch ungesättigten, keinen aktiven Wasserstoff enthaltenden Monomers und 10 bis 98 Gew.-% eines Polyols,

2) Polymerisieren der Mischung von (1) unter Anwendung von (freien) Radikalpolymerisationsverfahren mit Kettenübertragungsmitteln zur Erzielung eines niedrigmolekularen Polymers,

3) Zugabe von ausreichend Polyisocyanat zur Erzielung eines Isocyanatgehaltes von 0,25 bis 15% und eines Isocyanat-Indexes größer als 1 und kleiner als 2 und Polymerisieren unter Anwendung von Kondensationspolymerisationsverfahren.

## Revendications

1. Composition d'adhésif thermofusible dépourvue de solvant, à base de polyuréthanne, qui est solide à température ambiante, comprenant:

a) 5 à 90% en poids d'un prépolymère d'uréthanne préparé par polymérisation par condensation d'un polyisocyanate et d'un polyol et ayant une teneur en isocyanate de 0,25 à 15% et un indice d'isocyanate supérieur à 1 et non supérieur à 2;

b) 10 à 95% en poids d'un polymère de bas poids moléculaire de monomères à insaturation éthylénique ne contenant pas d'hydrogène actif;

ladite formulation d'adhésif thermofusible étant caractérisée, en l'absence d'agents d'adhésivité et/ou de plastifiants, par une viscosité de 3 à 50 Pa.s (3000 à 50 000 cps) à 120°C.

2. Composition d'adhésif thermofusible suivant la revendication 1, dans laquelle le monomère à insaturation éthylénique est choisi dans le groupe comprenant des esters en $C_1$ à $C_{12}$ de l'acide acrylique et de l'acide méthacrylique, des esters vinyliques et des éthers, des fumarates, des maléates, le styrène, l'acrylonitrile, l'éthylène et leurs mélanges.

3. Composition d'adhésif thermofusible suivant la revendication 1, dans laquelle le prépolymère d'uréthanne est préparé par polymérisation par condensation d'un diol et d'un diisocyanate.

4. Composition d'adhésif thermofusible suivant la revendication 1, dans laquelle les monomères à insaturation éthylénique sont polymérisés à une viscosité intrinsèque de 0,1 à 0,4.

5. Composition d'adhésif thermofusible suivant la revendication 1, dans laquelle le polyol est choisi dans le groupe comprenant des polyalkylène-éther-glycols ou des polyhydroxy-polyalkylène-éthers substitués ou non substitués, des polyhydroxy-polyesters, les produits d'addition de l'éthylène ou de l'oxyde de propylène sur des polyols, et les esters monosubstitués du glycérol.

6. Composition d'adhésif thermofusible suivant la revendication 1, dans laquelle le polyisocyanate est choisi dans le groupe comprenant le diisocyanate d'éthylène, le diisocyanate d'éthylidène, le diisocyanate de propylène, le diisocyanate de butylène, le diisocyanate d'hexaméthylène, le diisocyanate de toluène, le 1,3-diisocyanate de cyclopentylène, le 1,4-diisocyanate de cyclohexylène, le 1,2-diisocyanate de cyclohexylène, le diisocyanate de 4,4'-diphénylméthane, le 4,4'-diisocyanate de 2,2-diphénylpropane, le diisocyanate de p-phénylène, le diisocyanate de m-phénylène, le diisocyanate de xylylène, le diisocyanate de 1,4-naphtylène, le diisocyanate de 1,5-naphtylène, le 4,4'-diisocyanate de diphényle, le 4,4'-diisocyanate d'azobenzène, le 4,4'-diisocyanate de diphénylsulfone, le diisocyanate de dichlorohexaméthylène, le diisocyanate de furfurylidène, le 2,4-diisocyanate de 1-chlorobenzène, le 4,4',4''-triisocyanato-triphénylméthane, le 1,3,5-triisocyanato-benzène, le 2,4,6-triisocyanato-toluène et le 2,2',5,5-tétra-isocyanate de 4,4'-diméthyl-diphénylméthane.

7. Composition d'adhésif thermofusible suivant la revendication 1, dans laquelle la teneur en isocyanate libre est inférieure à 4%.

8. Composition d'adhésif thermofusible suivant la revendication 7, dans laquelle la teneur en isocyanate libre est inférieure à 1%.

9. Composition d'adhésif thermofusible dépourvue de solvant, à base de polyuréthanne, qui est solide à température ambiante, comprenant un prépolymère de polyuréthanne à terminaison isocyanate renfermant, à l'état polymérisé, un polymère de bas poids moléculaire d'une résine à saturation éthylénique, dans laquelle le prépolymère de polyuréthanne à terminaison isocyanate possède une teneur en isocyanate de 0,25 à 15% et un indice d'isocyanate supérieur à 1 et non supérieur à 2; ledit adhésif étant préparé par les étapes consistant:

1) à mélanger 2 à 90% en poids d'un monomère à insaturation éthylénique ne contenant pas d'hydrogène actif et 10 à 98% en poids d'un polyol;

2) à polymériser le mélange de (1) en utilisant des procédés de polymérisation radicalaire avec des agents de transfert de chaîne pour obtenir un polymère de bas poids moléculaire;

3) à y ajouter une quantité de polyisocyanate suffisante pour parvenir à la teneur en isocyanate et à l'indice d'isocyanate désirés, et à effectuer la polymérisation en utilisant des procédés de polymérisation par condensation.

10. Composition d'adhésif thermofusible suivant la revendication 9, dans laquelle le monomère à insaturation éthylénique est choisi dans le groupe comprenant des esters en $C_1$ à $C_{12}$ de l'acide acrylique et de l'acide méthacrylique, des esters vinyliques et des éthers, des fumarates, des maléates, le styrène, l'acrylonitrile, l'éthylène et leurs mélanges.

11. Composition d'adhésif thermofusible suivant la revendication 9, dans laquelle le prépolymère d'uréthanne est préparé par polymérisation par condensation d'un diol et d'un diisocyanate.

12. Composition d'adhésif thermofusible suivant la revendication 9, dans laquelle les monomères à insaturation éthylénique sont polymérisés à une viscosité intrinsèque de 0,1 à 0,4.

13. Composition d'adhésif thermofusible suivant la revendication 9, dans laquelle le polyol est choisi dans le groupe comprenant des polyalkylène-éther-glycols ou des polyhydroxy-polyalkylène-éthers substitués ou non substitués, des polyhydroxy-polyesters, les produits d'addition d'oxyde d'éthylène ou de propylène sur des polyols, et les esters monosubstitués du glycérol.

14. Composition d'adhésif thermofusible suivant la revendication 9, dans laquelle le polyisocyanate est choisi dans le groupe comprenant le diisocyanate d'éthylène, le diisocyanate d'éthylidène, le diisocyanate de propylène, le diisocyanate de butylène, le diisocyanate d'hexaméthylène, le diisocyanate de toluène, le 1,3-diisocyanate de cyclopentylène, le 1,4-diisocyanate de cyclohexylène, le 1,2-diisocyanate de cyclohexylène, le diisocyanate de 4,4'-diphénylméthane, le 4,4'-diisocyanate de 2,2-diphénylpropane, le diisocyanate de p-phénylène, le diisocyanate de m-phénylène, le diisocyanate de xylylène, le diisocyanate de 1,4-naphtylène, le diisocyanate de 1,5-naphtylène, le 4,4'-diisocyanate de diphényle, le 4,4'-diisocyanate d'azobenzène, le 4,4'-diisocyanate de diphénylsulfone, le diisocyanate de dichlorhexaméthylène, le diisocyanate de furfurylidène, le 2,4-diisocyanate de 1-chlorobenzène, le 4,4',4"-triisocyanato-triphénylméthane, le 1,3,5-diisocyanato-benzène, le 2,4,6-triisocyanato-toluène et le 2,2',5,5-tétra-isocyanate de 4,4'-diméthyl-diphénylméthane.

15. Composition d'adhésif thermofusible suivant la revendication 9, dans laquelle la teneur en isocyanate libre est inférieure à 4%.

16. Composition d'adhésif thermofusible suivant la revendication 15, dans laquelle la teneur en isocyanate libre est inférieure à 1%.

17. Procédé de production d'une composition d'adhésif thermofusible dépourvue de solvant, à base de polyuréthanne, qui est solide à température ambiante, caractérisé, en l'absence d'agents d'adhésivité ou de plastifiants ajoutés, par une viscosité de 3 à 50 Pa.s (3000 à 50 000 cps) à 120°C, comprenant les étapes consistant:

1) à mélanger 2 à 90% en poids d'un monomère à insaturation éthylénique ne contenant pas d'hydrogène actif et 10 à 98% en poids d'un polyol;

2) à polymériser le mélange de (1) en utilisant des procédés de polymérisation radicalaire avec des agents de transfert de chaînes pour obtenir un polymère de bas poids moléculaire;

3) à y ajouter une quantité de polyisocyanate suffisante pour parvenir à une teneur en isocyanate de 0,25 à 15% et à un indice d'isocyanate supérieur à 1 et inférieur à 2, et à effectuer la polymerisation en utilisant des procédés de polymérisation par condensation.